Europäisches Patentamt

European Patent Office

Office européen des brevets

(11) Veröffentlichungsnummer: **0 150 019 B1**

(12) **EUROPÄISCHE PATENTSCHRIFT**

(45) Veröffentlichungstag der Patentschrift: 06.03.91

(51) Int. Cl.⁵: **C25B 15/08**, C25B 9/00

(21) Anmeldenummer: 85100186.7

(22) Anmeldetag: **10.01.85**

(54) **Elektrolyseverfahren mit flüssigen Elektrolyten und porösen Elektroden.**

(30) Priorität: 19.01.84 DE 3401638

(43) Veröffentlichungstag der Anmeldung:
31.07.85 Patentblatt 85/31

(45) Bekanntmachung des Hinweises auf die
Patenterteilung:
06.03.91 Patentblatt 91/10

(84) Benannte Vertragsstaaten:
AT BE CH DE FR GB IT LI NL SE

(56) Entgegenhaltungen:
DE-A- 2 534 357
FR-A- 2 514 376
US-A- 3 647 653
US-A- 4 389 287

CHEMIE INGENIEUR TECHNIK, 41. Jahrgang,
Erstes September-Heft 1969, Heft 17, Weinheim, Bergstrasse, F. BECK et al.
"Entwicklung neuer Zellen für elektroorganische Synthesen" Seiten 943-950

CHEMIE INGENIEUR TECHNIK, 55. Jahrgang
1983, Nr. 1, Weinheim, Bergstrasse, G. KREY-
SA "Elektrochemie mit dreidimensionalen
Elektroden" Seiten 23-30

(73) Patentinhaber: HOECHST AKTIENGESELL-
SCHAFT
Postfach 80 03 20
W-6230 Frankfurt am Main 80(DE)

(72) Erfinder: **Tetzlaff, Karl-Heinz**
Mörikestrasse 6
W-6233 Kelkheim (Taunus)(DE)
Erfinder: **Schmid, Dieter, Dr.**
Ostring 132
W-6231 Schwalbach/Taunus(DE)
Erfinder: **Russow, Jürgen, Dr.**
Am Schieferberg 45
W-6233 Kelkheim (Taunus)(DE)

## Beschreibung

Gegenstand der Erfindung, ist ein Elektrolyseverfahren für flüssige Elektrolyte in einer ungeteilten oder durch mindestens eine Trennwand geteilten Elektrolysezelle mit mindestens einer Gegenelektrode und mindestens einer porösen Elektrode, durch die der Elektrolyt geleitet wird, für gasentwickelnde Reaktionen. Es ist bei gut leitfähigen und wenig leitfähigen Elektrolyten anwendbar, beispielsweise bei der Alkalichlorid-Elektrolyse und bei der Entfernung von giftigen Metallsalzen im ppm-Bereich.

Wie Jeder Fachmann weiß ist die Überspannung an einer Elektrode eine Funktion der Stromdichte. Man ist daher bestrebt, Elektroden mit großen Oberflächen einzusetzen, beispielsweise perforierte oder poröse Elektroden.

Bei guter Elektrolytleitfähigkeit sind die Elektroden häufig in Elektrolyten eingetaucht und von beiden Seiten benetzt oder nur von einer Seite mit Elektrolyt beaufschlagt. Die große Oberfläche poröser Elektroden kann dadurch aber nur zum Teil ausgenutzt werden, weil sich durch die Reaktion Konzentrationsunterschiede aufbauen und der Stoffaustausch eingeschränkt ist.

Bei schlechter, Elektrolytleitfähigkeit werden häufig Festbett-Elektrolyseure eingesetzt, wie sie beispielsweise in Chem.-Ing.-Techn. 55 (1983) Nr. 1, S. 23-30 beschrieben sind. Bei geteilten Zellen läßt man den Elektrolyten senkrecht zum Ladungsfluß durch eine dicke grobporige Elektrode fließen. Bei optimaler Nutzung des Elektrodenmaterials ergibt sich unter Grenzstrombe dingungen eine in Fließrichtung dicker werdende Elektrode. Eine Anpassung oder gar Optimierung der Raumzeitausbeute durch gezielte Veränderung der Fließgeschwindigkeit innerhalb der Elektrode kann nur durch Veränderung der Elektrodenbreite erfolgen. Dag ist technisch unbefriedigend. Nachteilig ist ferner die zwangsläufige Kopplung von Elektrolytdurchfluß und Umsatz, die eine sehr genaue Auslegung erfordert. Durch den langen Strömungsweg ist die beschriebene Festbettzelle auf relativ grobe Partikel beschränkt.

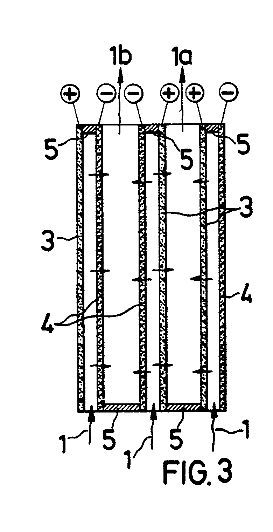

Nach der DE-A 2 534 357 ist ein Elektrolyseapparat mit einer porösen Elektrode bekannt, die aus Kohlefasern besteht. Bei der in Fig. 3 gezeigten Anordnung tritt der Elektrolyt parallel zur Elektrode in den Elektrolytraum ein und fließt im wesentlichen parallel zum Ladungsfluß von der Rückseite der Elektrode zur Vorderseite der Elektrode.

Nach der FR-A-2 514 376 ist eine Elektrolysezelle bekannt, bei der die Elektrode und die durchbrochene gegenelektrode parallel zueinander angeordnet sind und einen einsitig geschlossenen Raum festlegen, in dem der Electrolyt als dü nner bis einige Millimeter dicker Film rieselt.

Die Aufgabe der Erfindung besteht nun darin, dich innere Oberfläche poröser Elektroden besser zu nutzen und die geschilderten Nachteile zu vermeiden.

Ed wird daher ein Elektrolyseverfahren der Eingangs genannten Art vorgeschlagen, das dadurch gekennzeichnet ist, daß der Elektrolyt parallel zur Elektrodenfläche eintritt und durch eine Drosselstelle gezwungen wird im wesentlichen parallel zum Ladungsfluß von der Vorderseite, die der Gegenelektrode Zuge-wandt ist, zur Rückseite durch die poröse Elektrode und durch die gegebenenfalls poröse Gegenelektrode zu fließen und das durch den Elektrolyseprozeß gebildete Gas an der Rückseite der porösen Elektrode austritt.

Eine weitere vorteilhafte Ausgestaltung der Erfindung, die sich auch für gasentwickelnde Reaktionen eignet, besteht darin, daß der Elektrolyt nach dem Durchfließen der porösen Elektrode an der Oberfläche in dünner Schicht unter Schwerkraftwirkung herabfließt und eine Phasengrenze zu einem Gasraum ausbildet. Um die poröse Elektrode möglichst gleichmäßig zu durchströmen, sollte der Druckverlust ein Vielfaches des hydrostatischen Druckes betragen.

Unter poröser Elektrode sind Elektroden mit großen inneren Oberflächen zu verstehen, beispielsweise Partikelschüttungen, lose oder gepreßte Faservliese oder Netze, die in mehreren Lagen übereinander liegen. Poröse Elektroden sind auch unter dem Namen "Gasdiffusionselektroden" bekannt. Derartige Elektroden können durch den speziellen Schichtenaufbau auch die Funktion eines Diaphragmas übernehmen. Die Elektroden können eben oder gekrümmt sein. Die Elektrolysezellen können ungeteilt sein oder durch Trennwände, wie beispielsweise Ionenaustauschermembranen oder Diaphragmen geteilt sein. Das Verfahren läßt sich mit verschiedenen Gegenelelektroden betreiben, und zwar mit durchbrochenen. geschlossenen und porösen Elektroden. Die Anordnung der Elektroden im Raum ist an sich beliebig.

Durch die Drosselstelle gelangt bie gasentwickelnden Reaktionen Gas und Elektrolyt in den rückwärtigen Raum hinter der Elektrode. In diesem Fall ist es besonders vorteilhaft, wenn der Elektrolyt am unteren Ende der Elektrode abgezogen werden kann. Es bildet sich dann auf der Rückseite der porösen Elektrode ein blasenhaltiger Fallfilm aus, dar in dünner Schicht unter Einwirkung der Schwerkraft herabfließt. Eine senkrechte Elektrodenanordnung ist bei Anordnungen mit freiem Fallfilm vorzuziehen, doch es ist auch jede Anordnung möglich, die einen Winkel zwischen 1 und 179 Grad gegenüber der Horizontalen besitzt. Der Raum hinter der porösen Elektrode beziehungsweise der durchbrochenen Elektrode soll nicht nur den in dünner Schicht herabfließenden Elektrolyten aufnehmen, sondern auch dar entstehende Gas. Dieser Gasraum bildet mit dem herabfließenden, Elektrolyten eine gemeinsame Phasengrenze aus. Der Gasraum braucht selbst bei großen Elektrolysezellen nur wenige Millimeter tief sein. Man kann diese Anordnung auch für Reaktionen ohne Gasentwicklung benutzen, indem man ein Fremdgas in die Elektrolysezelle einführt. Auf diese Weise können kompakte bipolare Anordnungen ohne bipolare Trennwände aufgebaut werden, da der schmale Gasraum isolierend wirkt.

In vielen Fällen benutzt man geteilte Zellen, um zu verhindern, daß die gebildeten Produkte an die Gegenelektrode gelangen. Bei Anwendung des erfindungsgemäßen Verfahrens kann man jedoch auf diese aufwendige Bauweise verzichten. Man kann hier ungeteilte Zellen einsetzen, bei denen mindestens eine poröse Elektrode eingesetzt wird, die in einer Richtung parallel zum Ladungstransport durchströmt wird. Die Durchströmung der porösen Elektrode erfolgt weitgehend rückvermischungsfrei. Die Verweilzeit des Elektrolyten in der aktiven Schicht der porösen Elektrode kann durch Wahl der Schichtdicke und des Durchflusses extrem klein gemacht werden. Unerwünschte Nebenreaktionen lassen sich so wirksam unterdrücken.

Die Elektrolyseure nach dem vorgeschlagenen Verfahren unterscheiden sich in ihrem grundsätzlichen Aufbau nur wenig von dem Stand der Technik. Es können daher viele Elektrolyseure durch Hinzufügen von Drosselleisten in einfacher Weise umgerüstet werden. Auch eine Umrüstung von geschlossenen Elektroden auf poröse Elektroden ist sicher in vielen Fällen vorteilhaft. Das kann zur Energieeinsparung und zur Erhöhung der Raumzeitausbeute ausgenutzt werden. Das Verfahren führt auch zur Einsparung von Elektrodenmaterial, weil je Masseneinheit eine größere Oberfläche nutzbar wird. Das gilt auch und besonders für verdünnte Elektrolytlösungen, die unter Grenzstrombedingungen arbeiten. Hier läßt sich durch Verkleinern des Poren- bzw. des Partikeldurchmessers die Raumzeitausbeute der Elektrode beträchtlich erhöhen.

Die Erfindung wird anhand der Figuren 1 bis 3 beispielslweise näher erläutert. Die Darstellungen sind stark vereinfacht und zeigen teilweise nur Ausschnitte aus Zellenpaketen, teilweise ist nur eine Halbzellenanordnung skizziert. Der Elektrolytfluß ist durch Pfeile gekennzeichnet.

Fig. 1 zeigt eine Halbzellenanordnung mit freiem Ablauf des Elektrolyten auf der Rückseite der porösen Elektrode.

Fig. 2 zeigt einen Ausschnitt aus Fig. 1

Fig. 3 zeigt ein monopolar geschaltetes ungeteiltes Zellenpaket mit poröser Elektrode und poröser Gegenelektrode.

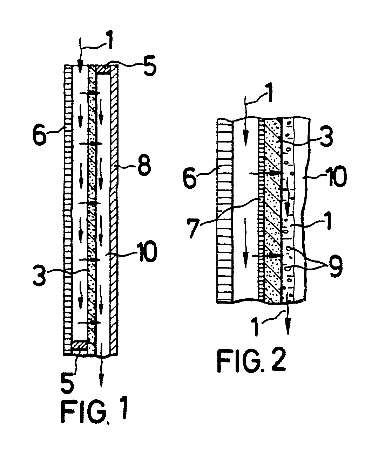

Fig. 1 zeigt eine Halbzellenanordnung mit Trennwand 6 und bipolarer Trennwand 8 zwischen denen eine poröse Elektrode 3 angeordnet ist:

Der Elektrolyt 1 strömt von oben in den Raum zwischen Trennwand 6 und poröser Elektrode 3 ein. Infolge abnehmender Elektrolytmenge kann der Abstand zwischen poröser Elektrode 3 und Trennwand 6 nach unten zu abnehmen. Durch die Drosselstelle 5 wird der Elektrolyt gezwungen, parallel zum Ladungstransport durch die poröse Elektrode 3 zu fließen. Wenn man nun dafür sorgt, daß der Elektrolyt 1 aus dem Raum zwischen poröser Elektrode 3 und bipolarer Trennwand 8 frei ablaufen kann, so bildet sich auf der Rückseite der porösen Elektrode 3 ein Fallfilm aus, der durch Wirkung der Schwerkraft in dünner Schicht nach unten abfließt. Diese Anordnung ist vorzugsweise für gasentwickelnde Reaktionen geeignet. Die entstehenden Gasblasen gelangen auf kurzem Wege aus dem herabfließenden Fallfilm an die Phasengrenze zum unmittelbar angrenzenden Gasraum 10 und setzen dort ihren Gasinhalt durch Zerplatzen frei. Die poröse Elektrode 3 sollte durch geeignete Schichtung ihrer porösen Struktur, die entstehenden Gase bevorzugt an der Rückseite abgeben.

Fig. 2 zeigt einen Ausschnitt aus Fig. 1 jedoch mit zusätzlichem Diaphragma 7. Der an der Rückseite der porösen Elektrode 3 herabfließende Elektrolyt-Fallfilm mit den Gasblasen 9 ist hier detailliert dargestellt. Das dargestellte Diaphragma 7 kann, wie oben ausgeführt, ein integraler Bestandteil der porösen Elektrode 3 sein.

Fig. 3 zeigt einen Ausschnitt aus einem monopolar geschalteten ungeteilten Zellenpaket mit poröser Elektrode 3 und poröser Gegenelektrode 4. Zur leichteren Unterscheidbarkeit sind die Elektroden mit Spannungssymbolen versehen. Der von unten eintretende Elektrolyt 1 wird durch die obere Drosselstelle 5 gezwungen, parallel zum Ladungstransport durch die beiden porösen Elektroden 3 und 4 zu strömen. Die an der Anode und an der Kathode gebildeten Produkte, gekennzeichnet mit 1a und 1b, können weitgehend unvermischt, getrennt abgezogen werden, um sie einer geeigneten Aufarbeitung zu unterziehen.

## Ansprüche

1. Elektrolyseverfahren für flüssige Elektrolyte in einer ungeteilten oder durch mindestens eine Trennwand geteilten Elektrolysezelle mit mindestens einer Gegenelektrode und mindestens einer porösen Elektrode, durch die der Elektrolyt geleitet wird, dadurch gekennzeichnet, daß der Elektrolyt parallel zur Elektrodenfläche eintritt und durch eine Drosselstelle gezwungen wird im wesentlichen parallel zum Ladungsfluß von der Vorderseite, die der Gegenelektrode zugewandt ist, zur Rückseite durch die poröse Elektrode und durch die gegebenenfalls poröse Gegenelektrode zu fließen und das durch den Elektrolyseprozeß gebildete Gas an der Rückseite der porösen Elektrode austritt.

2. Verfahren nach Anspruch 1, dadurch gekennzeichnet, daß die poröse Elektrode auf ihrer Vorderseite eine Schicht aufweist, die die Funktion eines Diaphragmas hat.

3. Verfahren nach Anspruch 1, dadurch gekennzeichnet, daß der Elektrolyt nach dem Durchfließen der porösen Elektrode an deren Rückseite in dünner Schicht unter Schwerkraftwirkung herabfließt und eine Phasengrenze zu einem Gasraum bildet.

## Claims

1. An electrolysis process for liquid electrolytes in an electrolytic cell which is non-partitioned or partitioned by at least one separator and has at least one counterelectrode and at least one porous electrode through which the electrolyte is conducted, wherein the electrolyte enters parallel to the surface of the electrode and is forced by one restriction point to flow, in a direction essentially parallel to the charge flow, through the porous electrode from the front, which faces the counterelectrode, to the back and through the optionally porous counterelectrode, and wherein the gas formed by the electrolysis process emerges at the back of the porous electrode.

2. Process as claimed in claim 1, wherein the porous electrode has on its front a layer which has the function of a diaphragm.

3. The process as claimed in claim 1, wherein the electrolyte, after flowing through the porous electrode, flows down under the action of gravity in a thin layer at the rear side of this electrode and forms a phase boundary to a gas space.

## Revendications

1. Procédé d'électrolyse pour électrolytes liquides dans une cellule d'électrolyse non divisée ou divisée par au moins une cloison, comportant au moins une contre-électrode et au moins une électrode poreuse, à travers de laquelle on fait passer l'électrolyte, caractérisé en ce que l'électrolyte pénètre parallèlement à la face de l'électrode et est obligé par un point d'étranglement de s'écouler, pour l'essentiel, parallèlement au flux de charges à travers l'électrode poreuse, depuis le côté avant dirigé vers la contre-électrode, jusqu'au côté arrière, ainsi qu'à travers la contre-électrode, éventuellement poreuse, et que le gaz formé par le processus d'électrolyse sort sur le côté arrière de l'électrode poreuse.

2. Procédé selon la revendication 1, caractérisé en ce que l'électrode poreuse présente sur son côté avant une couche ayant la fonction d'un diaphragme.

3. Procédé selon la revendication 1, caractérisé en ce que l'électrolyte, après son écoulement à travers l'électrode poreuse, s'écoule vers le bas par gravité sous forme d'une couche mince sur le côté arrière de l'électrode poreuse et forme une limite de phase avec un volume de gaz.

FIG. 1

FIG. 2

FIG. 3